# EUROPEAN PATENT APPLICATION

(11) **EP 2 415 845 A1**
(43) Date of publication of application: **08.02.2012**
(21) Application number: 11176641.6
(22) Date of filing: 05.08.2011
(51) Int. Cl.: C09J 7/02, C09J 9/00

(54) **Pressure-sensitive adhesive tape**

(30) Priority: 05.08.2010 JP 2010176455; 20.07.2011 JP 2011158934
(71) Applicant: NITTO DENKO CORPORATION, Ibaraki-shi, Osaka 567-8680 (JP)
(72) Inventor: Soeda, Yoshikazu, Ibaraki-shi, Osaka 567-8680 (JP); Jozuka, Kenta, Ibaraki-shi, Osaka 567-8680 (JP); Yoshida, Noboru, Ibaraki-shi, Osaka 567-8680 (JP); Mizutori, Takahisa, Ibaraki-shi, Osaka 567-8680 (JP); Suzuki, Toshihide, Ibaraki-shi, Osaka 567-8680 (JP)
(74) Representative: Grünecker, Kinkeldey, Stockmair & Schwanhäusser

(57) **Abstract**

A pressure-sensitive adhesive tape includes a substrate layer made of a plastic material, etc., and a pressure-sensitive adhesive layer provided on at least one of the surfaces of the substrate layer. The pressure sensitive adhesive tape has the thermal resistance at 80°C of less than 2.00 [cm²*K/W] and the total thickness of the substrate layer and the pressure-sensitive adhesive layer of less than 10 µm. In addition, the pressure-sensitive adhesive layer may be provided on both surfaces of the substrate layer. The total thickness of the substrate layer and the pressure-sensitive adhesive layer may be less than 6 µm.

## Description

This application is based upon and claims the benefit of priority from the prior Japanese Patent Application No. 2010-176455, filed on August 5, 2010 and Japanese Patent Application No. 2011-158934, filed on July 20, 2011, the entire contents of which are incorporated herein by reference.

The present invention relates to a pressure-sensitive adhesive tape, in particular, to a pressure-sensitive adhesive tape to be preferably used in joint portions between various components, which generate heat during the manufacture (assembly) of various office automation equipment, mobile devices, or electronic components, and thermally conductive sheets.

In recent years, miniaturization of mobile devices, such as mobile phones, digital cameras, and PDAs (Personal Digital Assistants), has been progressing. With this, miniaturization and thinning of various electronic components to be mounted in the mobile devices have also been progressing. For example, mobile phones that are typical equipment as the mobile devices are in a trend in which each of the major components thereof is made to be thin. A display portion of a mobile device is usually composed of an LCD module and a backlight unit, and is formed by laminating various sheet-shaped components in order to exhibit the functions, such as emission, reflection, shield, and guiding of light. Accordingly, a double-faced pressure-sensitive adhesive tape to be used for the assembly (joining) of these components has been devised (see Japanese Patent Application Publication No. 2005-105212).

With the progress of the miniaturization and thinning of the mobile devices including the aforementioned mobile phones, the integration degree of the various electronic components mounted therein is increased, thereby further improvement in the heat radiation property being demanded. Accordingly, use of a thermally conductive sheet is considered in order to efficiently radiate the heat generated by the various components to the outside.

However, when a conventional double-faced pressure-sensitive adhesive tape is used for joining a thermally conductive sheet with an electronic component, there is further room for improvement in terms of communicating the heat generated by the electronic component to the thermally conductive sheet.

The present invention has been made in view of these situations, and a purpose of the invention is to provide a pressure-sensitive adhesive tape having good thermal conductivity.

In order to solve the aforementioned problem, a pressure-sensitive adhesive tape according to an embodiment of the present invention comprises a substrate layer and a pressure-sensitive adhesive layer provided on at least one of the surfaces of the substrate layer. The pressure-sensitive adhesive tape has the thermal resistance at 80°C of less than 2. 00 [cm²*K/W] and the total thickness of the substrate layer and the pressure-sensitive adhesive layer of less than 10 µm.

According to the embodiment, the pressure-sensitive adhesive tape has a small thermal resistance and a good thermal conductivity. Further, because the thickness of the pressure-sensitive adhesive tape is small, the tape contributes to the thinning of a component or an apparatus in which the tape is used.

Embodiments will now be described, by way of example only, with reference to the accompanying drawings, which are meant to be exemplary, not limiting, and wherein like elements are numbered alike in several figures, in which:
Fig. 1 is a schematic view illustrating an example of a double-faced pressure-sensitive adhesive tape or sheet according to the present embodiment;
Fig. 2A is a schematic front view illustrating an apparatus used when a thermal resistance is measured in Examples; Fig. 2B is a schematic side view of the apparatus illustrated in Fig. 2A; and
Fig. 3 is a graph showing the relationship between a total thickness of the tape and a thermal resistance.

The invention will now be described by reference to the preferred embodiments. This does not intend to limit the scope of the present invention, but to exemplify the invention.

Embodiments of the present invention will now be described in detail with reference to the accompanying drawings and the table. In each of the following embodiments, description will be made, taking a double-faced pressure-sensitive adhesive tape or sheet having pressure-sensitive adhesive layers on both surfaces thereof as an example; however, the double-faced pressure-sensitive adhesive tape or sheet may be replaced by a pressure-sensitive adhesive tape or sheet having a pressure-sensitive adhesive layer on one of the surfaces thereof in accordance with applications.

### [Double-Faced Pressure-Sensitive Adhesive Tape or Sheet]

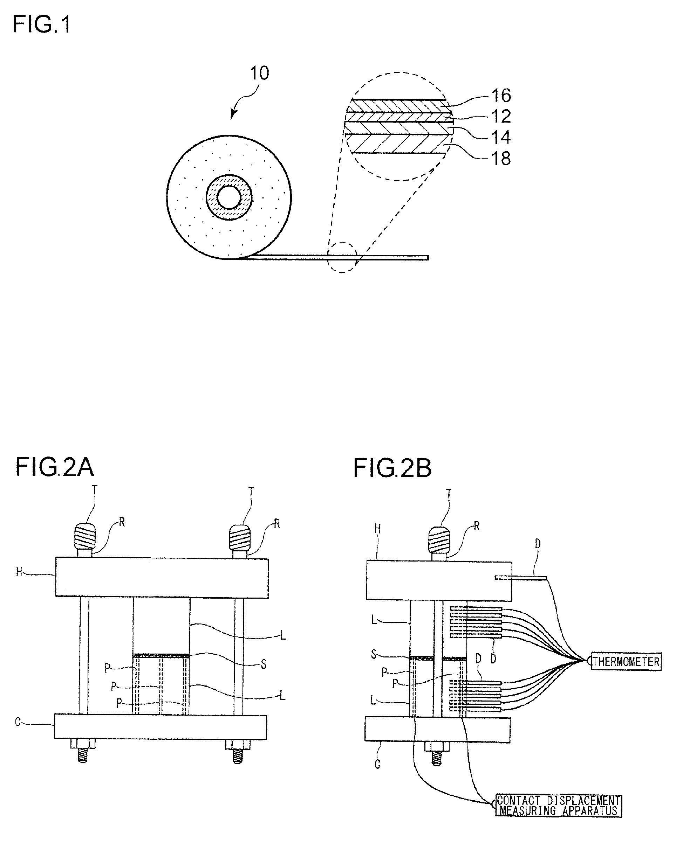

Fig. 1 is a schematic view illustrating an example of a double-faced pressure-sensitive adhesive tape or sheet according to the present embodiment. In the following description, the double-faced pressure-sensitive adhesive tape or sheet (hereinafter, appropriately referred to as a "double-faced pressure-sensitive adhesive tape") 10 according to the embodiment refers to a double-faced pressure-sensitive adhesive tape with a substrate having pressure-sensitive adhesive layers 14 and 16 on both surfaces of the substrate layer 12, as illustrated in Fig. 1. The double-faced pressure-sensitive adhesive tape 10 has the total thickness of the substrate layer 12 and the two pressure-sensitive adhesive layers 14 and 16 formed on both surfaces of the substrate layer 12 of 3 µm or more to less than 10 µm, and has the thermal resistance at 80°C of less than 2.00 [cm²*K/W], preferably less than 1.50 [cm²*K/W] (the lower value is 0.05 [cm²*K/W] or more), as measured in the later-described method. As stated above, the double-faced pressure-sensitive adhesive tape 10 according to the embodiment has a small thickness of less than 10 µm, despite having the substrate layer 12, and further is excellent in thermal conductivity with a small thermal resistance.

Accordingly, the double-faced pressure-sensitive adhesive tape 10 according to the present embodiment can be applied to an area where a joint means using a double-faced pressure-sensitive adhesive tape has not been conventionally adopted because the thickness of the joint portion (the clearance between the components to be joined) is small, for example, to an area where the clearance acceptable for the members to be adhered together is less than 10 µm. Thereby, uniform adhesion work using the double-faced pressure-sensitiveadhesive tape 10 can be performed. In other words, the whole apparatus in which multiple components joined together by the double-faced pressure-sensitive adhesive tape are to be housed can be thinned. For example, the double-faced pressure-sensitive adhesive tape is preferably used in a mobile device or a thin TV set, which are strongly demanded to be thin and the temperature of the inside of which is likely to be high during its operation. In more detailed description, the double-faced pressure-sensitive adhesive tape can be used in the adhesion between a heat-generating component, such as an LCD backlight unit and a semiconductor chip for a mobile phone, and a heat-radiating component, such as a thermally conductive sheet. Thereby, the thinning of a component or an apparatus as well as the improvement in the heat radiation property thereof can be achieved.

As illustrated in Fig. 1, the double-faced pressure-sensitive adhesive tape 10 has a configuration in which the pressure-sensitive adhesive layer 14 is formed on one surface of the substrate layer 12 and the pressure-sensitive adhesive layer 16 is formed on the other surface thereof. The double-faced pressure-sensitive adhesive tape 10 has a roll-shaped wound form in which, after the pressure-sensitive adhesive layer 14 has been protected by a release liner 18 (separator), the double-faced pressure-sensitive adhesive tape 10 is then overlapped one on another such that the pressure-sensitive adhesive layer 16 is brought into contact with the other surface of the release liner 18 (the surface opposite to the pressure-sensitive adhesive layer 14).

The total thickness of the double-faced pressure-sensitive adhesive tape 10 according to the present embodiment is not particularly limited, as far as the thickness is 3 µm or more to less than 10 µm. For example, the thickness can be selected from a range of 3 µm or more to 6 µm or less, and preferably from a range of 3 µm or more to 5 µm or less. Thereby, the thinning of a component or an apparatus in which the double-faced pressure-sensitive adhesive tape 10 is used can be further achieved.

The total thickness of the double-faced pressure-sensitive adhesive tape 10 means the thickness of a portion to be used in adhesion. That is, the total thickness of the double-faced pressure-sensitive adhesive tape 10 means the thickness (total thickness) from one adhesive surface to the other adhesive surface. Specifically, because the double-faced pressure-sensitive adhesive tape 10 according to the present embodiment has the substrate layer 12, the total thickness thereof means the thickness of the substrate layer 12 and the two pressure-sensitive adhesive layers 14 and 16 formed on both surfaces of the substrate layer 12, excluding the thickness of the release liner 18 for protecting the adhesive surfaces. In the case of a single-faced pressure-sensitive adhesive tape in which a pressure-sensitive adhesive layer is formed only on one surface of a substrate layer, the total thickness means the thickness of the substrate layer and the pressure-sensitive adhesive layer formed on one surface of the substrate layer, excluding the thickness of the release liner for protecting the adhesive surface.

### (Substrate Layer)

The material and the thickness, etc. , of the substrate layer 12 are not particularly limited, as far as the total thickness of the double-faced pressure-sensitive adhesive tape 10 can be within a range of 3 µm or more to less than 10 µm and the thermal resistance at 80°C thereof can be less than 2.00 [cm²*K/W]. Examples of the material of the substrate layer 12 include, for example, a plastic material, paper material, fiber material (woven fabric, nonwoven fabric, or the like), and metallic material, etc. A plastic material is preferably used as the material of the substrate layer 12. That is, a plastic film can be preferably used as the substrate layer 12.

As such a plastic material (material of a plastic film), various engineering plastic materials can be preferably used. Specific example of the plastic material include, for example: polyesters [poly(ethylene terephthalate) (PET), poly(ethylene naphthalate) (PEN), poly(butylene terephthalate) (PBT), etc.], olefin resins [olefin resins whose monomer components are α-olefins, such as polyethylene (PE), polypropylene (PP), ethylene-propylene copolymer, and ethylene-vinyl acetate copolymer (EVA), etc.], polyethersulfone (PES) (polyether sulphone), polysulfone, polyvinyl chloride (PVC), poly(phenylene sulfide) (PPS), amide resins [polyamide (nylon), all aromatic polyamides (aramid), etc.], polyimide (PI), polyamide imide, polyetherimide (PEI), polyesterimide, methacrylate resins [poly(methyl methacrylate) (PMMA), etc.], styrene resins [polystyrene, acrylonitrile-styrene copolymer (AS resin), acrylonitrile-butadiene-styrene copolymer (ABS resin), etc.], polycarbonate (PC), polyacetal, polyarylene ether (poly(phenylene ether), etc.), poly(phenylene sulfide), polyarylate, polyaryl, polyurethanes, polyether ketones [polyether ether ketone (PEEK), polyether ketone ketone, etc.], polyester acrylates (polybutyl acrylate, polyethyl acrylate, etc.), and epoxy resin, etc. These materials (plastic materials) can be used alone or in combination of two or more thereof.

As the plastic material, in particular, polyesters (among them, poly (ethylene terephthalate)) can be preferably used in terms of thickness accuracy, tensile strength, and processability, etc. That is, polyester films (among them, a poly(ethylene terephthalate) film) can be preferably used as the substrate layer.

In addition, the substrate layer is not structurally limited and may have a form of a single layer or a laminated layer. The thickness of the substrate layer can be selected from a range of, for example, 1 µm or more to less than 10 µm (preferably 1.5 µm or more to less than 8 µm, and more preferably 2 µm or more to less than 6 µm).

The surface of the substrate layer (in particular, the substrate layer made of a plastic material) may be subjected to a commonly-used surface treatment, for example, a chemical or physicaloxidationtreatment,such aschromic acid treatment,ozone exposure, flame exposure, high-pressure electrical-shock exposure, ionization radiation treatment, or the like, in order to enhance the adhesiveness with the pressure-sensitive adhesive layer to be formed on the substrate layer. Alternatively, the surface of the substrate layer may be subjected to a coating treatment by an undercoat agent.

In addition, the substrate layer may be colored. The types of the coloration include, for example, black and white. As a method of coloration, a black or white area may be provided on the surface of the substrate layer by printing. In this case, a colored area (colored areas) may be provided on one surface or both surfaces of the substrate layer. Alternatively, a black or white pigment or dye may be contained in the substrate layer. Herein, "the substrate layer is colored" includes not only the case where a pigment or dye is contained in the substrate layer, but also the case where a colored area is formed (printed) on the surface of the substrate layer. Design can be provided to the pressure-sensitive adhesive tape by coloring the substrate layer.

When a colored area on the surface of the substrate layer is formed by printing, the colored area can be formed by, for example, applying an ink composition thereto. Herein, the colored area may be formed by applying the ink composition one time, or two times or more. Additionally, a non-colored area on the surface of the substrate layer, which is to be in contact with the above colored area, may be subjected to various treatments, such as a corona treatment and an undercoating treatment with a primer, etc. , in terms of enhancing the adhesiveness between the non-colored area and the colored area in the substrate layer.

### (Pressure-Sensitive Adhesive Layer)

A pressure-sensitive adhesive of which the pressure-sensitive adhesive layer is composed is not particularly limited, but can be appropriately selected from publicly-known adhesives, for example, such as an acrylic pressure-sensitive adhesive, rubber pressure-sensitive adhesive, silicone pressure-sensitive adhesive, urethane pressure-sensitive adhesive, polyester pressure-sensitive adhesive, styrene-diene block copolymer pressure-sensitive adhesive, vinyl alkyl ether pressure-sensitive adhesive, polyamide pressure-sensitive adhesive, fluorine pressure-sensitive adhesive, creep property-improved pressure-sensitive adhesive, and radiation-curable pressure-sensitive adhesive. These pressure-sensitive adhesives can be used alone or in combination of two or more thereof.

As the pressure-sensitive adhesive, an acrylic pressure-sensitive adhesive can be preferably used in terms of the reliability of adhesion. An acrylic pressure-sensitive adhesive contains an acrylic polymer as an adhesive component (base polymer) or a major agent, and further contains appropriate additives, such as a cross-linking agent, tackifier, softener, plasticizer, filler, anti-aging agent, and colorant, if necessary. The aforementioned acrylic polymer is prepared by using alkyl (meth) acrylate ester as a monomer major component and further by using, if necessary, a monomer (copolymeric monomer) that can be copolymerized with the above alkyl(meth)acrylate ester. Examples of the alkyl(meth)acrylate ester include, for example: (meth)acrylic acid C₁₋₂₀ alkyl esters [preferably (meth)acrylic acid C₄₋₁₈ alkyl (straight or branched alkyl) esters], etc., such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth) acrylic acid nonadecyl, and (meth) acrylic acid eicosyl. An alkyl(meth)acrylate ester can be appropriately selected in accordance with the target adhesiveness, etc. Alkyl(meth)acrylate esters can be used alone or in combination of two or more thereof.

Examples of the copolymeric monomer include, for example: carboxyl group-containing monomers, such as (meth) acrylic acid, itaconic acid, maleic acid, fumaric acid, crotonic acid, and isocrotonic acid, or anhydrides thereof; sulfonate group-containing monomers, such as sodium vinylsulfonate; aromatic vinyl compounds, such as styrene and substituted styrene; cyano group-containing monomers, such as acrylonitrile; olefins, such as ethylene, propylene, and butadiene; vinyl esters, such as vinyl acetate; vinyl chloride; amidogroup-containingmonomers, such as acrylamide, methacrylamide, N-vinyl pyrrolidone, and N,N-dimethyl(meth)acrylamide; hydroxyl group-containing monomers, such as (meth)acrylic acid hydroxyalkyl and glycerin dimethacrylate; amino group-containing monomers, such as (meth)acrylic acid aminoethyl and (meth)acryloyl morpholine; imide group-containing monomers, such as cyclohexyl maleimide and isopropyl maleimide; epoxy group-containing monomers, such as (meth)acrylic acid methylglycidyl; and isocyanate group-containing monomers, such as 2-methacryloyloxyethyl isocyanate, as well as polyfunctional copolymeric monomers (polyfunctional monomers), such as triethylene glycol di(meth)acrylate, diethylene glycol di(meth)acrylate, ethylene glycol di (meth) acrylate, tetraethylene glycol di (meth) acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, and divinylbenzene. Copolymeric monomers can be used alone or in combination of two or more thereof. A monomer for modification having a functional group, such as a carboxyl group, can be preferably used as the copolymeric monomer.

An acrylic polymer can be prepared by a commonly-used polymerization method, such as a solution polymerization method, emulsion polymerization method, ultraviolet irradiation polymerization method, or the like.

The thickness of each pressure-sensitive adhesive layer can be appropriately selected in view of the adhesive property and the total thickness of the double-faced pressure-sensitive adhesive tape or sheet. The thickness of each pressure-sensitive adhesive layer can be selected from a range of, for example, 0.5 µm or more to less than 4 µm (preferably 1 µm or more to less than 3 µm, and more preferably 1.2 µm or more to less than 2 µm). The thickness of each of the two pressure-sensitive adhesive layers formed on both surfaces of the substrate layer, i.e., the pressure-sensitive adhesive layer on the front surface of the substrate layer and that on the back surface thereof, is not particularly specified, but can be appropriately selected in accordance with applications. In addition, the thickness of each of the two pressure-sensitive adhesive layers formed on both surfaces of the substrate layer may be same or different as/from each other; however, they are mostly selected so as to be same or almost same as each other.

### (Release Liner)

In the double-faced pressure-sensitive adhesive tape or sheet according to the present embodiment, a release liner for protecting the adhesive surface of the pressure-sensitive adhesive layer can be provided before the tape or sheet is used. Such a release liner is not particularly specified, but can be appropriately selected from publicly-known release liners. Specific examples of the release liner may include those made of, for example, plastic films having themselves high release property [e.g., polyolefin films made of polyolefin resins consisting of polyethylene (low density polyethylene, linear low density polyethylene, etc.), polypropylene, ethylene-α-olefin copolymers (block copolymers or random copolymers), such as ethylene-propylene copolymers, and mixtures thereof; and films made of fluorine resins, etc.]. Among them, release liners each having a configuration in which a release treatment layer is formed on the surface(s) (one surface or both surfaces) of various substrate layers can be preferably used.

Aplastic film is preferably used as the substrate of a release liner, but a paper (e.g., Japanese paper, foreign paper, glassine paper, or the like), nonwoven fabric or cloth, foaming body, metallicfoil, compositesubstratemadeof various substrates (e.g., metal vapor deposition plastic film, etc.) may also be used. The thickness of the substrate can be appropriately selected in accordance with targets, but generally made to be approximately 10 to 500 µm. Examples of the material of the plastic film used as the substrate of a release liner include thermoplastic resins consisting of: polyesters, such as polyethylene terephthalate; polyolefins, such as polypropylene, polyethylene, and ethylene-propylene copolymer, etc.; polyvinyl chloride; polyimide; and polycarbonate, etc. The plastic film may be either of a non-oriented film and an oriented (mono-axially or bi-axially oriented) film.

In addition, the release treatment layer can be formed by using a release treatment agent (e.g., a silicone release agent, fluorine release treatment agent, long-chain alkyl release treatment agent, or the like), which is publicly-known or commonly-used as a release treatment agent for forming a release treatment layer in a release liner. Alternatively, the release treatment layer may be formed on the substrate layer by laminating or coating: a polyolefin film made of a polyolefin resin selected from the group of polyethylene, polypropylene, ethylene-a-olefin copolymers, such as ethylene-propylene copolymer, and the like; or a film made of a fluorine resin. In the release liner, the release treatment layer may be provided on one surface or both surfaces of the substrate, as stated above.

By adjusting the release force of the release liner with respect to the pressure-sensitive adhesive layer to be 1N/50 mm or less, the deformation of the double-faced pressure-sensitive adhesive tape or sheet, occurring during adhesion work (work for releasing the release liner), can be suppressed or prevented, thereby allowing the workability to be improved. A release liner and the release force thereof can be appropriately selected or adjusted in accordance with applications, etc., and are not particularly limited.

The double-faced pressure-sensitive adhesive tape or sheet according to the present embodiment may have a laminated form in which sheets have been laminated together, or have a wound form in which a sheet has been wound into a roll shape. For example, the double-faced pressure-sensitive adhesive tape or sheet having a roll-shaped wound form can be produced by using, as the release liner, a long belt-shaped release liner whose both surfaces are release treatment surfaces, and by laminating the release liner onto the long belt-shaped double-faced pressure-sensitive adhesive tape or sheet, so that one of the release treatment surfaces of the release liner is overlapped onto the adhesive surface of one of the pressure-sensitive adhesive layers of the tape or sheet and the other release treatment surface of the release liner is overlapped onto the adhesive surface of the other pressure-sensitive adhesive layer thereof, and then by winding the overlapped tape or sheet into a roll shape. Alternatively, the double-faced pressure-sensitive adhesive tape or sheet having a roll-shaped wound form can be produced by using, as the release liner, two long belt-shaped release liners, only one surface of each of which is a release treatment surface, and by protecting the adhesive surface of one of the pressure-sensitive adhesive layers of the long belt-shaped double-faced pressure-sensitive adhesive tape or sheet with one of the release liners and by protecting the adhesive surface of the other pressure-sensitive adhesive layer thereof with the other release liner, and then by winding the protected tape or sheet into a roll shape.

The length of the double-faced pressure-sensitive adhesive tape or sheet having such a roll-shaped wound form is not particularly limited, as far as the tape or sheet has a long belt shape, but is usually 5 m or longer (preferably 10 m or longer, and more preferably 20 m or longer).

### Examples

The present inventionwill now be describedmore specifically by using Examples according to the invention. In the following description, the "parts" and "%" means parts by weight and % by weight, respectively.

### (Example 1 of Preparation of Pressure-Sensitive Adhesive)

An acrylic polymer having a weight average molecular weight of 500, 000 was obtained by melt polymerizing 97 parts of n-butyl acrylate, 3 parts of acrylic acid, and 0.1 parts of 2-hydroxyethyl acrylate for six hours in a mixed solution of toluene and ethyl acetate (toluene/ethyl acetate (weight ratio) =1/1] with the use of 0.2 parts of azobisisobutyronitrile as a polymerization initiator. A pressure-sensitive adhesive (sometimes referred to as a pressure-sensitive adhesive composition; "adhesive A") was prepared by adding 30 parts of terpene phenol resin (Product Name: "YS Polystar T-130" made by YASUHARA CHEMICAL CO. , LTD. , softening temperature: 130°C) and 2 parts of isocyanate cross-linking agent (Product Name: "CORONATE L" made by Nippon Polyurethane Industry Co., Ltd.) to 100 parts of the above acrylic polymer, and then by agitating and mixing them to obtain a uniform mixture.

### (Example 1)

Pressure-sensitive adhesive layers each having a thickness of 1.5 µm were formed on both surfaces of a polyester film (Product Name: "C660-2. OW" made by Mitsubishi Chemical Polyester Co., Ltd. , thickness: 2 µm), which was used as a substrate layer, by using the above adhesive A. Thus, a pressure-sensitive adhesive tape (double-faced pressure-sensitive adhesive tape) having a total thickness of 5 µm of Example 1 was produced.

### (Comparative Example 1)

Pressure-sensitive adhesive layers each having a thickness of 4 µm were formed on both surfaces of a polyester film (Product Name: "C660-2. OW" made by Mitsubishi Chemical Polyester Co. , Ltd. , thickness: 2 µm), which was used as a substrate layer, by using the above adhesive A. Thus, a pressure-sensitive adhesive tape (double-faced pressure-sensitive adhesive tape) having a total thickness of 10 µm was produced.

### (Comparative Example 2)

Pressure-sensitive adhesive layers each having a thickness of 13 µm were formed on both surfaces of a polyester film (Product Name: "K880-4.5W" made by Mitsubishi Chemical Polyester Co. , Ltd. , thickness: 4 µm), which was used as a substrate layer, by using the above adhesive A. Thus, a pressure-sensitive adhesive tape (double-faced pressure-sensitive adhesive tape) having a total thickness of 30 µm was produced.

### (Comparative Example 3)

Pressure-sensitive adhesive layers each having a thickness of 44 µm were formed on both surfaces of a polyester film (Product Name: "LUMIRROR #12" made by TORAY INDUSTRIES, INC., thickness: 12 µm), which was used as a substrate layer, by using the above adhesive A. Thus, a pressure-sensitive adhesive tape (double-faced pressure-sensitive adhesive tape) having a total thickness of 100 µm was produced.

### (Example 2)

A black layer (whole thickness thereof: 1.5 µm) was formed on one surface of a polyester film (Product Name: "C660-2. OW" made by Mitsubishi Chemical Polyester Co., Ltd., thickness: 2 µm) by using a black ink composition containing carbon black as a black colorant with the use of a gravure printing method. Thus, a substrate layer having a thickness of 3.5 µm was produced. A pressure-sensitive adhesive layer having a thickness of 1.5 µm was formed on the other surface of the substrate layer (the surface opposite to the surface where the black layer had been printed) by using the above adhesive A. Thus, apressure-sensitive adhesive tape (single-faced pressure-sensitive adhesive tape) having a total thickness of 5 µm of Example 2 was produced. In the pressure-sensitive adhesive tape of Example 2, the substrate layer is composed of a polyester film and a black layer (printed layer). That is, the substrate layer of the pressure-sensitive adhesive tape of Example 2 is colored black.

### (Example 3)

A white layer (whole thickness thereof: 1.5 µm) was formed on one surface of a polyester film (Product Name: "C660-2. OW" made by Mitsubishi Chemical Polyester Co., Ltd., thickness: 2 µm) by using a white ink composition containing titanium dioxide as a white colorant with the use of a gravure printing method. Thus, a substrate layer having a thickness of 3.5 µm was produced. A pressure-sensitive adhesive layer having a thickness of 1.5 µm was formed on the other surface of the substrate layer (the surface opposite to the surface where the white layer had been printed) by using the above adhesive A. Thus, apressure-sensitiveadhesive tape (single-faced pressure-sensitive adhesive tape) having a total thickness of 5 µm of Example 3 was produced. In the pressure-sensitive adhesive tape of Example 3, the substrate layer is composed of a polyester film and a white layer (printed layer). That is, the substrate layer of the pressure-sensitive adhesive tape of Example 3 is colored white.

### (Evaluation)

The thermal resistance at 80°C of the double-faced pressure-sensitive adhesive tape according to each of Examples 1 to 3 and Comparative Examples 1 to 3 was measured. The measurements were performed by using a thermal resistance evaluation apparatus illustrated in Figs. 2A and 2B. Fig. 2A is a schematic front view illustrating the apparatus used in the measurement of the thermal resistance in Examples; and Fig. 2B is a schematic side view of the apparatus illustrated in Fig. 2A.

Specifically, a pair of rods L, each of which was made of aluminum (A 5052, coefficient of thermal conductivity: 140W/m*K) and formed into a cube with one side of 20 mm, were bonded together by sandwiching a double-faced pressure-sensitive adhesive tape S (20 mm × 20 mm) between them.

Subsequently, they were arranged between a heat-generating body H (heater block) and a heat-radiating body C(cooling base plate configured such that cooling water was circulated inside) such that the rods were located up and down. Specifically, the heat-generating body H was arranged on the upper rod L and the heat-radiating body C beneath the lower rod L.

In this case, the pair of rods L, which had been bonded together with the double-faced pressure-sensitive adhesive tape S, were located between a pair of pressure-regulating screws T penetrating the heat-generating body and the heat-radiating body. Load cells R were installed between the pressure-regulating screws T and the heat-generating body H such that the pressure, occurring when the pressure-regulating screw T was tightened, was measured. Such pressure was used as the pressure applied to the double-faced pressure-sensitive adhesive tape S.

Also, three probes P (diameter thereof: 1 mm) of a contact displacement measuring apparatus were installed such that they penetrated the lower rod L and the double-faced pressure-sensitive adhesive tape S from the heat-radiating body C side. In this case, the upper end portion of each of the probes P was in contact with the lower surface of the upper rod L such that the gap between the upper and lower rods L (i.e. , the thickness of the double-faced pressure-sensitive adhesive tape S) was measured.

Temperature sensors D were attached to the heat-generating body H and the upper and lower rods L (see Fig. 2B). Specifically, the temperature sensors D were attached to a position of the heat-generating body H and to five positions of each rod L at vertical intervals of 5 mm.

Pressure was first applied to the double-faced pressure-sensitive adhesive tape S by tightening the pressure-regulating screws T, and the temperature of the heat-generating body H was then set to 80°C and the cooling water at 20°C was circulated inside the heat-radiating body C.

After the temperature of each of the heat-generating body H and the upper and lower rods L was stabilized, the temperature of each of the upper and lower rods L was measured with each temperature sensor D to calculate the heat flux passing through the double-faced pressure-sensitive adhesive tape S based on the coefficient of thermal conductivity and the temperature gradient of each of the upper and lower rods L, and also to calculate the temperature of the interface between each of the upper and lower rods L and the double-faced pressure-sensitive adhesive tape S. Subsequently, the whole thermal resistance (cm²*K/W) at the pressure was calculated by using these values. Herein, the whole thermal resistance was measured when the pressure applied to the double-faced pressure-sensitive adhesive tape S was 250 kPa.

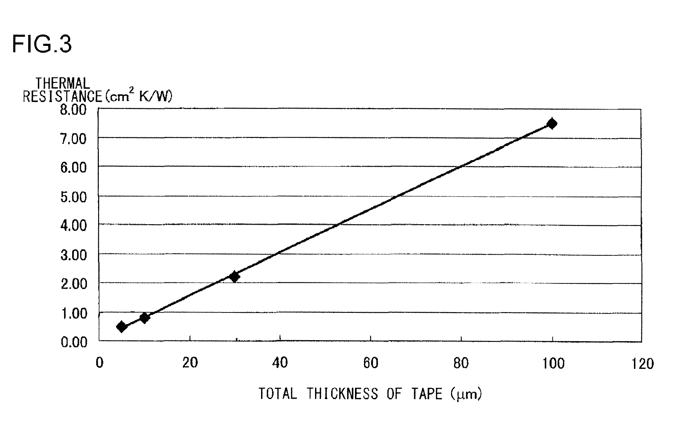

Table 1 shows the thickness of the substrate layer, total thickness of the tape, and thermal resistance of each of the pressure-sensitive adhesive tapes of Examples 1 to 3 and Comparative examples 1 to 3. Fig. 3 is a graph showing the relationship between the total thickness of a tape and the thermal resistance.

**[Table 1]**

| | THICKNESS OF SUBSTRATE LAYER (*µ*m) | TOTAL THICKNESS OF TAPE (*µ*m) | THERMAL RESISTANCE (cm²K/W) |
|---|---|---|---|
| EXAMPLE 1 | 2 | 5 | 0.48 |
| COMPARATIVE EXAMPLE 1 | 2 | 10 | 0.80 |
| C0MPARATIVE EXAMPLE 2 | 4 | 30 | 2.20 |
| COMPARATIVE EXAMPLE 3 | 12 | 100 | 7.50 |
| EXAMPLE 2 | 3.5 | 5 | 0.49 |
| EXAMPLE 3 | 3.5 | 5 | 0.49 |

As shown in Fig. 3, there is a good correlation between the total thickness of a tape and the thermal resistance, and accordingly a pressure-sensitive adhesive tape having a small thermal resistance can be obtained by thinning the total thickness of the tape. Specifically, it is preferable that the total thickness of a tape is less than 10 µm, and more preferable that the total thickness thereof is 6 µm or less. In addition, it is better that the thickness of a pressure-sensitive adhesive layer is less than 3 µm. Thereby, the double-faced pressure-sensitive adhesive tape further contributes to the thinning of a component and an apparatus in which the tape is used. Further, the double-faced pressure-sensitive adhesive tape of Example 1 has a small thermal resistance of 0.48 [cm²*K/W], and accordingly the tape can fix multiple components together while exhibiting good thermal conductivity. In addition, each of the single-faced pressure-sensitive adhesive tapes of Examples 2 and 3 has a small thermal resistance of 0.49 [cm²*K/W], and accordingly the tape can be provided with design while exhibiting good thermal conductivity.

The pressure-sensitive adhesive tape according to the present embodiment is configured to be usable in the temperature environment at 60°C or higher. Thereby, the tape can also be applied to a product that is strongly demanded to be thin and the temperature of the inside of which is likely to be high, for example, such as a mobile device or an LCD TV set.

The pressure-sensitive adhesive layer of the pressure-sensitive adhesive tape according to the present embodiment contains thermally conductive fillers in an amount of less than 20 parts by weight per 100 parts by weight of a polymer major component of which the pressure-sensitive adhesive layer is composed. Herein, the "polymer major component of which the pressure-sensitive adhesive layer is composed" means a major component polymer, for example, such as an acrylic polymer in the case of an acrylic pressure-sensitive adhesive, or a natural rubber and a synthetic rubber, etc., in the case of a rubber pressure-sensitive adhesive.

It is preferable that the pressure-sensitive adhesive layer contains thermally conductive fillers in an amount of less than 10 parts by weight (more preferably less than 5 parts by weight) per 100 parts by weight of a polymer major component. It is more preferable that the pressure-sensitive adhesive layer substantially contains no filler. Herein, "substantially contains no" filler may be interpreted as the case where fillers are contained in a small amount in which the fillers do not function. A filler generally causes a decrease in the adhesive force of a pressure-sensitive adhesive layer. Accordingly, a decrease in the adhesive force can be suppressed by making the content of fillers small. On the other hand, good thermal conductivity can be exhibited because a thermal resistance is still small even when the content of fillers is made small.

The present invention has been described above based on the embodiments and Examples. The embodiments are described for exemplary purposes only, and it can be readily understood by those skilled in the art that various modifications may be made by making various combinations of the aforementioned componentsorprocesses, which are also encompassed in the scope of the present invention.

For example, embodiments made by the following combinations can fall within the scope of the present invention. (1) A pressure-sensitive adhesive tape comprising: a substrate layer; and a pressure-sensitive adhesive layer provided on at least one of the surfaces of the substrate layer, wherein the thermal resistance at 80°C is less than 2.00 [cm²*K/W], and wherein the total thickness of the substrate layer and the pressure-sensitive adhesive layer is less than 10 µ.
(2) The pressure-sensitive adhesive tape according to the combination (1), wherein the pressure-sensitive adhesive layer is provided on both surfaces of the substrate layer.
(3) The pressure-sensitive adhesive tape according to the combination (1) or combination (2), wherein the thermal resistance at 80°C is less than 1.50 [cm²*K/W].
(4) The pressure-sensitive adhesive tape according to the any one of the combinations (1) to (3), wherein the total thickness of the substrate layer and the pressure-sensitive adhesive layer is less than 6 µm.
(5) The pressure-sensitive adhesive tape according to any one of the combinations (1) to (4), wherein the pressure-sensitive adhesive tape is usable in the temperature environment at 60°C or higher.
(6) The pressure-sensitive adhesive tape according to any one of the combinations (1) to (5), wherein the pressure-sensitive adhesive tape is used for the adhesion between a heat-generating component and a thermally-conductive sheet.
   The pressure-sensitive adhesive tape according to any one of the combinations (1) to (6), wherein the pressure-sensitive adhesive layer contains thermally conductive fillers in an amount of less than 20 parts by weight per 100 parts by weight of a polymer major component of which the pressure-sensitive adhesive layer is composed.
(8) The pressure-sensitive adhesive tape according to any one of the combinations (1) to (7), wherein the substrate layer is colored.

## Claims

1. A pressure-sensitive adhesive tape comprising:
a substrate layer; and
a pressure-sensitive adhesive layer provided on at least one of the surfaces of the substrate layer, wherein
the thermal resistance at 80°C is less than 2.00 [cm²*K/W], and wherein
the total thickness of the substrate layer and the pressure-sensitive adhesive layer is less than 10 µm.

2. The pressure-sensitive adhesive tape according to claim 1, wherein
the pressure-sensitive adhesive layer is provided on both surfaces of the substrate layer.

3. The pressure-sensitive adhesive tape according to claim 1 or claim 2, wherein
the thermal resistance at 80°C is less than 1.50 [cm²*K/W] .

4. The pressure-sensitive adhesive tape according to any one of claims 1 to 3, wherein
the total thickness of the substrate layer and the pressure-sensitive adhesive layer is less than 6 µm.

5. The pressure-sensitive adhesive tape according to any one of claims 1 to 4, wherein
the pressure-sensitive adhesive tape is usable in the temperature environment at 60°C or higher.

6. The pressure-sensitive adhesive tape according to any one of claims 1 to 5, wherein
the pressure-sensitive adhesive tape is used for the adhesion between a heat-generating component and a thermally conductive sheet.

7. The pressure-sensitive adhesive tape according to any one of claims 1 to 6, wherein
the pressure-sensitive adhesive layer contains thermally conductive fillers in an amount of less than 20 parts by weight per 100 parts by weight of a polymer major component of which the pressure-sensitive adhesive layer is composed.

8. The pressure-sensitive adhesive tape according to any one of claims 1 to 7, wherein
the substrate layer is colored.
